# DEMANDE DE BREVET EUROPEEN

(11) **EP 2 228 980 A2**
(43) Date de publication de la demande: **15.09.2010**
(21) Numéro de dépôt: 10155617.3
(22) Date de dépôt: 05.03.2010
(51) Int. Cl.: H04N 1/00

(54) **Dispositif de maintien en position d'un premier élément et d'un deuxième élément et appareil de traitement de feuilles comportant un tel dispositif**

(30) Priorité: 09.03.2009 FR 0901079
(71) Demandeur: SAGEM COMMUNICATIONS SAS, 92500 Rueil Malmaison (FR)
(72) Inventeur: Touz, Frédéric, 92500 Rueil-Malmaison (FR)
(74) Mandataire: Lavialle, Bruno François Stéphane

(57) **Abrégé**

Dispositif de maintien en position d'un premier élément (2) et d'un deuxième élément (1) articulés l'un à l'autre, comprenant une béquille (3) ayant une extrémité (3.1) pourvue des moyens (5) de sa fixation au premier élément et une extrémité libre (3.2) pourvue d'une saillie latérale (4), et une portion de châssis (10) sensiblement verticale destinée à équiper le deuxième élément, la portion de châssis définissant un logement supérieur (11) et un logement inférieur (12) pour recevoir la saillie latérale de l'extrémité libre de la béquille et comportant une rampe (13) entre le logement supérieur et le logement inférieur agencée pour exercer un effort croissant sur la saillie latérale lorsque la saillie latérale est déplacée d'un des logements vers l'autre, la béquille étant associée à des moyens de rappel élastique (9) de la saillie latérale contre la portion de châssis.

Appareil de traitement de feuilles comportant un tel dispositif.

## Description

La présente invention concerne un dispositif de maintien en position relative de deux éléments et un appareil de traitement de feuilles comportant un tel dispositif.

Il est connu des appareils de traitement de feuilles comportant un châssis et un capot articulé sur le châssis. Dans les appareils multifonctions, formant scanner et imprimante, le châssis incorpore un dispositif d'impression, un chargeur de feuilles à imprimer et des moyens de transport des feuilles depuis le chargeur jusqu'à une sortie du châssis en passant par le dispositif d'impression tandis que le capot incorpore un dispositif de numérisation et un chargeur de feuilles à numériser. Le capot est généralement double et comporte une partie basse intégrant le dispositif de numérisation derrière une vitre de protection et une partie haute intégrant le chargeur de feuilles à numériser et des moyens d'amenée des feuilles à numériser devant la vitre de protection. La structure double du capot autorise la numérisation des feuilles à plat, en ouvrant la partie haute du capot pour appliquer manuellement les feuilles contre la vitre de protection, ou par défilement, en laissant la partie haute du capot fermée pour que les moyens d'amenée transportent automatiquement les feuilles du chargeur de feuilles à numériser jusqu'en regard du dispositif de numérisation. L'ensemble du capot est ouvert, selon les appareils, soit pour accéder à la sortie des feuilles imprimées soit pour intervenir dans le châssis, par exemple pour remédier à un bourrage des feuilles dans le chemin de transport des feuilles notamment en sortie du dispositif d'impression ou pour changer la cartouche d'impression.

De tels appareils comprennent des moyens pour assurer le maintien du capot en position fermée et en position ouverte, des moyens d'assistance à l'ouverture du capot pour soulager l'utilisateur d'une partie du poids du capot lors de l'ouverture et empêcher l'utilisateur d'exercer un effort violent qui pourrait détériorer l'appareil, et des moyens de freinage du capot à la fermeture pour éviter une brusque retombée du capot lors de sa fermeture qui pourrait endommager l'appareil ou blesser l'utilisateur si celui-ci a malencontreusement laissé un doigt sous le capot. Les moyens d'assistance et de freinage comprennent par exemple des ressorts et/ou des vérins amortisseurs montés directement entre le châssis et le capot. Ces moyens peuvent également assurer le maintien en position ouverte. Le maintien n'est alors pas assuré de manière positive. Les moyens de maintien en position fermée comprennent par exemple un loquet. L'ensemble de ces moyens présente une structure relativement complexe, avec de nombreuses pièces assemblées les unes aux autres, qui augmente le coût des appareils.

Dans d'autres appareils, le capot comporte un simple volet dépourvu de chargeur en partie haute.

Un but de l'invention est de réaliser à moindre coût le maintien en position de deux éléments l'un par rapport à l'autre.

A cet effet, on prévoit, selon l'invention, un dispositif de maintien en position d'un premier élément et d'un deuxième élément articulés l'un à l'autre, comprenant une béquille ayant une extrémité pourvue des moyens de sa fixation au premier élément et une extrémité libre pourvue d'une saillie latérale, et une portion de châssis sensiblement verticale destinée à équiper le deuxième élément. La portion de châssis définit un logement supérieur et un logement inférieur pour recevoir la saillie latérale de l'extrémité libre de la béquille et comporte une rampe, entre le logement supérieur et le logement inférieur, agencée pour exercer un effort croissant sur la saillie latérale lorsque la saillie latérale est déplacée d'un des logements vers l'autre. La béquille est associée à des moyens de rappel élastique de la saillie latérale contre la portion de châssis.

Ainsi, la coopération de la saillie latérale avec les logements permet d'assurer le maintien en position des deux éléments tandis que la rampe permet d'exercer un freinage pour un déplacement dans le sens de l'accroissement de l'effort exercé sur la saillie latérale et une assistance pour un déplacement dans le sens de la diminution de l'effort exercé sur la saillie latérale. La rampe exerce un effet de came sur la béquille. Le dispositif a ainsi une structure simple avec un nombre de pièces réduit.

Selon un mode de réalisation particulier :
- la rampe est en un matériau à fort coefficient de friction,
- ledit matériau à fort coefficient de friction est un matériau souple,
- ledit matériau à fort coefficient de friction est un élastomère.

Le freinage est alors assuré de manière particulièrement efficace par la rampe.

Selon un mode de réalisation particulier de la béquille, les moyens de fixation comprennent un axe d'articulation sensiblement horizontal autorisant un débattement angulaire de la béquille dans un plan sensiblement perpendiculaire à la rampe et les moyens de rappel élastique comprennent un ressort de rappel.

Avantageusement alors, les moyens de fixation comprennent une chape à laquelle la béquille est reliée par l'axe d'articulation et le ressort de rappel s'étend entre la chape et une portion de la béquille opposée à la saillie latérale.

Ceci permet de simplifier le montage de la béquille sur le premier élément en rapportant sur celui-ci un ensemble prémonté comportant la chape, l'axe d'articulation, la béquille et le ressort.

De préférence, la saillie latérale et au moins un des logements sont agencés pour permettre un dégagement de la saillie latérale hors dudit logement lorsqu'est exercé sur la béquille un effort, supérieur à un seuil prédéterminé, pour déplacer la saillie latérale vers l'autre logement.

Le dégagement de la saillie latérale hors des logements est donc réalisé en exerçant simplement un effort plus important, le dégagement constituant un point dur dans le déplacement de la saillie latérale entre les deux logements.

L'invention concerne également un appareil de traitement de feuilles, comportant deux éléments articulés l'un à l'autre, à savoir un châssis et un capot articulé au châssis entre une position basse de fermeture et une position haute d'ouverture, et au moins un dispositif de maintien du type ci-dessus monté de telle manière que la saillie de l'extrémité libre de la béquille soit reçue dans les logements de la portion de châssis lorsque le capot est dans les positions haute et basse.

Selon un mode de réalisation particulier, la béquille est solidaire du capot et la portion de châssis est solidaire du châssis, et la rampe est agencée pour exercer un effort croissant sur la saillie latérale lorsque la saillie latérale est déplacée du logement supérieur au logement inférieur.

Avantageusement, l'appareil comprend un seul dispositif décalé par rapport à un plan médian du capot perpendiculaire à un axe d'articulation du capot au châssis.

D'autres caractéristiques et avantages de l'invention ressortiront à la lecture d'un mode de réalisation particulier non limitatif de l'invention.

Il sera fait référence aux dessins annexés, parmi lesquels :

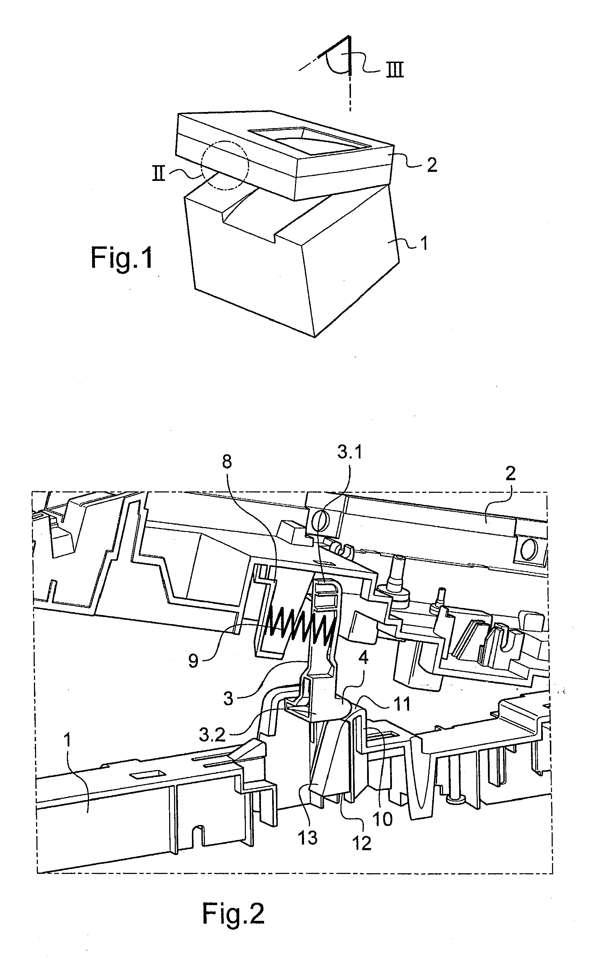

- la figure 1 est une vue schématique en perspective d'un appareil conforme à l'invention,
- la figure 2 est une vue de détail, en perspective, de la zone II de la figure 1,
- la figure 3 est une vue schématique partielle, en coupe selon le plan III de la figure 1 de l'appareil en position fermée,
- la figure 4 est une vue, analogue à la figure 3, de l'appareil en position intermédiaire,
- la figure 5 est une vue analogue à la figure 3 de l'appareil en position ouverte,
- la figure 6 est une vue de détail en perspective de la béquille montée,
- la figure 7 est une vue de la béquille en coupe selon le plan VII de la figure 6,
- la figure 8 est une vue de la béquille en coupe selon le plan VIII de la figure 6,
- la figure 9 est une vue de détail en perspective de la portion de châssis, sans la rampe,
- la figure 10 est une vue de la portion de châssis en coupe selon le plan X de la figure 9.

En référence aux figures, l'appareil conforme à l'invention est un appareil de traitement de feuilles, comportant deux éléments articulés l'un à l'autre, à savoir un châssis 1 et un capot 2 articulé au châssis 1 entre une position basse de fermeture et une position haute d'ouverture.

L'appareil est ici un appareil multifonction formant scanner et imprimante. Le châssis 1 incorpore un dispositif d'impression, un chargeur de feuilles à imprimer et des moyens de transport des feuilles depuis le chargeur jusqu'à une sortie du châssis 1 en passant par le dispositif d'impression. Le capot 2 incorpore un dispositif de numérisation, un chargeur de feuilles à numériser et des moyens d'amenée des feuilles depuis le chargeur de feuilles à numériser vers une sortie du capot 2 en passant en regard du dispositif de numérisation. Le châssis 1 et le capot 2 sont connus en eux-mêmes de sorte qu'ils ne sont pas détaillés ici.

L'appareil comprend un dispositif de maintien en position du capot 2 par rapport au châssis 1.

Le dispositif comprend une béquille 3 ayant une extrémité 3.1 pourvue des moyens de sa fixation au capot 2 et une extrémité libre 3.2 pourvue d'une saillie latérale 4. Les moyens de fixation comprennent un axe d'articulation 5, en une seule pièce avec l'extrémité 3.1, s'étendant de manière sensiblement horizontale et perpendiculaire à la saillie latérale 4. Les extrémités de l'axe d'articulation 5 sont reçues à pivotement dans des demi-paliers 6 ménagés dans une face inférieure du capot 2 et des demi-paliers 7 ménagés dans une chape 8 rapportée sur la face inférieure du capot 2 et fixée sur celle-ci par des vis. Les moyens de fixation autorisent ainsi un débattement angulaire de la béquille 3. Un ressort de rappel 9 s'étend entre la chape 8 et une portion de la béquille 3 opposée à la saillie latérale 4.

Le dispositif comprend en outre une portion de châssis 10 solidaire du châssis 1 et sensiblement verticale. La portion de châssis 9 définit un logement supérieur 11 et un logement inférieur 12 pour recevoir la saillie latérale 4 de l'extrémité libre 3.2 de la béquille 3. Le logement supérieur 11 se trouve légèrement derrière le logement inférieur 12 par rapport à la béquille 3 et une rampe 13 s'étend entre le logement supérieur 11 et le logement inférieur 12. Les logements supérieur 11 et inférieur 12 de la portion de châssis 10 sont écartés d'une distance telle que la saillie latérale 4 de l'extrémité libre 3.2 de la béquille 3 soit reçue dans les logements supérieur 11 et inférieur 12 de la portion de châssis 10 lorsque le capot 2 est dans les positions haute et basse. On notera qu'ici le logement supérieur 11 est ouvert vers le haut et le logement inférieur 12 est ouvert vers le bas. La butée supérieure définissant la position haute du capot 2 est fournie par un rebord 14 de la portion de châssis 10 qui coopère avec un taquet 15 saillant d'un côté de l'extrémité 3.2 perpendiculairement à la saillie latérale 4. La butée inférieure définissant la position basse du capot 2 est fournie par le contact du capot 2 contre le châssis 1.

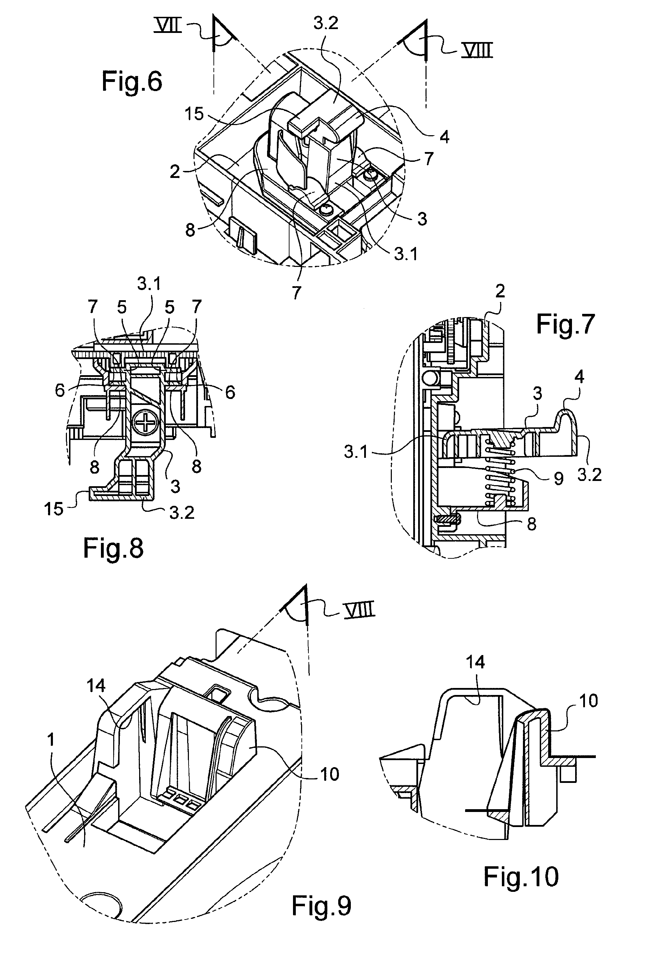

La rampe 13 est agencée pour exercer un effort croissant sur la saillie latérale 4 à l'encontre du ressort de rappel 9 lorsque la saillie latérale 4 est déplacée d'un des logements vers l'autre, à savoir ici du logement supérieur 11 au logement inférieur 12. La rampe 13 est en un matériau à fort coefficient de friction, un matériau souple à savoir un élastomère. La rampe 13 a un plan médian parallèle au plan dans lequel s'inscrit la béquille 3 lors de son débattement angulaire. La rampe 13 comporte des portions engagées à force dans des ouvertures de la portion de châssis 10 (la cavité recevant de la portion de châssis 10 recevant la rampe 13 est visible sur les figures 9 et 10).

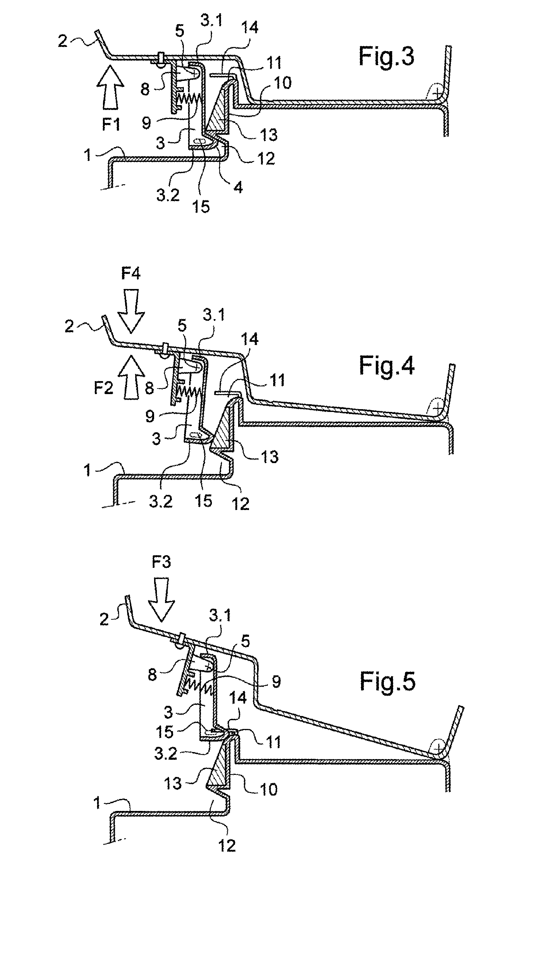

Le débattement angulaire de la béquille 3 est telle que la béquille 3 possède une première position, en avant (visible sur la figure 3), vers laquelle elle est rappelée élastiquement par le ressort de rappel 9 et dans laquelle la saillie latérale 4 peut être reçue par le logement supérieur 11 et une deuxième position, en arrière, dans laquelle la saillie latérale 4 peut être dégagée du logement inférieur 12. Le ressort de rappel 9 constitue ainsi un moyen de rappel élastique de la saillie latérale 4 contre la portion de châssis 10.

La saillie latérale 4 et les logements 11, 12 sont agencés pour permettre un dégagement de la saillie latérale 4 hors de chaque logement 11, 12 lorsqu'est exercé sur la béquille 3 un effort (F3 sur la figure 5), supérieur à un seuil prédéterminé, pour déplacer la saillie latérale 4 vers l'autre logement 12, 11. La saillie latérale 4 possède à cette fin une surface inférieure et une surface supérieure qui sont inclinées l'une vers l'autre.

Le déplacement du capot 2 de sa position d'ouverture vers sa position de fermeture va maintenant être décrit.

Le capot 2 étant en position d'ouverture (figure 5), la saillie latérale 4 est dans sa première position et est reçue dans le logement supérieur 11 et le taquet 15 est en butée contre le rebord 14.

Lorsqu'un effort F3 (supérieur au poids du capot 2) est exercé sur la béquille 3 en direction du logement inférieur 12, la surface inférieure de la saillie latérale 4 coopère avec une surface correspondante du logement supérieur 11 (une surface arrondie en l'espèce) pour déplacer la béquille 3 vers sa deuxième position dégageant ainsi la saillie latérale 4 du logement supérieur 11 et amenant la saillie latérale 3 sur la rampe 13.

La rampe 13 déplace la béquille 3 vers sa deuxième position au fur et à mesure que le capot 2 est déplacé vers sa position de fermeture et exerce ainsi un effort croissant sur la béquille 3 en s'opposant à l'effort exercé par le ressort de rappel 9. La rampe 13 oppose une résistance croissante au déplacement du capot 2 vers sa position de fermeture et freine le capot 2.

Lorsque la saillie latérale 4 arrive en regard du logement inférieur 12, le ressort de rappel 9 provoque l'engagement de la saillie latérale 4 dans le logement inférieur 12.

Le déplacement du capot 2 de sa position de fermeture vers sa position d'ouverture va maintenant être décrit.

Un effort de soulèvement F1 (supérieur au poids F2 du capot 2) exercé sur le capot 2 engendre un effort de déplacement de la béquille 3 en direction du logement supérieur 11, la surface supérieure de la saillie latérale 4 coopère avec une surface correspondante du logement inférieur 12 pour déplacer la béquille 3 vers sa deuxième position dégageant ainsi la saillie latérale 4 du logement inférieur 12 et amenant la saillie latérale 3 sur la rampe 13 (voir la figure 4).

La rampe 13 laisse progressivement libre le déplacement de la béquille 3 vers sa deuxième position sous l'effet du ressort de rappel 9 au fur et à mesure que le capot 2 est déplacé vers sa position d'ouverture. La rampe 13 exerce ainsi un effort décroissant sur la béquille 3 et facilite le déplacement du capot 2 vers sa position d'ouverture. L'utilisateur exerce alors un effort F2 inférieur à l'effort F1 initial.

Lorsque la saillie latérale 4 arrive en regard du logement supérieur 11, le ressort de rappel 9 provoque l'engagement de la saillie latérale 4 dans le logement supérieur 11.

Bien entendu, l'invention n'est pas limitée au mode de réalisation décrit mais englobe toute variante entrant dans le champ de l'invention telle que définie par les revendications.

En particulier, dans le mode de réalisation décrit, la béquille 3 peut être montée sur le châssis 1 et la portion de châssis 10 sur le capot 2.

La rampe 13 est ici réalisée en élastomère et possède un angle de 20° environ par rapport à la verticale. Il est possible de modifier le freinage et l'assistance à la remontée procurés par celle-ci en modifiant le matériau utilisé, l'inclinaison de la rampe, la forme de la saillie latérale, la précontrainte du ressort de rappel, la hauteur du point d'application du ressort de rappel sur la béquille par rapport à l'axe d'articulation...

Le ressort de rappel 9 est ici un ressort hélicoïdal de compression : il est possible d'utiliser un ressort de traction ou de torsion.

La béquille peut être rigidement fixée à l'élément auquel elle est associée, les moyens de son rappel élastique résultant de son aptitude à se déformer élastiquement entre deux positions angulaires.

La rampe peut être collée ou fixée par tout autre mode, ou bien encore être réalisée en une seule pièce avec la portion de châssis.

Dans le mode de réalisation décrit, l'appareil comprend un seul dispositif décalé par rapport à un plan médian du capot perpendiculaire à un axe d'articulation du capot au châssis. L'appareil peut néanmoins comprendre deux dispositifs disposés de part et d'autre du plan médian.

En variante, le capot peut comprendre un simple volet dépourvu de chargeur.

## Revendications

1. Dispositif de maintien en position d'un premier élément (2) et d'un deuxième élément (1) articulés l'un à l'autre, comprenant une béquille (3) ayant une extrémité (3.1) pourvue des moyens (5) de sa fixation au premier élément et une extrémité libre (3.2) pourvue d'une saillie latérale (4), et une portion de châssis (10) sensiblement verticale destinée à équiper le deuxième élément, la portion de châssis définissant un logement supérieur (11) et un logement inférieur (12) pour recevoir la saillie latérale de l'extrémité libre de la béquille et comportant une rampe (13) entre le logement supérieur et le logement inférieur agencée pour exercer un effort croissant sur la saillie latérale lorsque la saillie latérale est déplacée d'un des logements vers l'autre, la béquille étant associée à des moyens de rappel élastique (9) de la saillie latérale contre la portion de châssis.

2. Dispositif selon la revendication 1, dans lequel la rampe (13) est en un matériau à fort coefficient de friction.

3. Dispositif selon la revendication 2, dans lequel ledit matériau à fort coefficient de friction est un matériau souple.

4. Dispositif selon la revendication 3, dans lequel ledit matériau à fort coefficient de friction est un élastomère.

5. Dispositif selon la revendication 1, dans lequel les moyens de fixation comprennent un axe d'articulation (5) sensiblement horizontal autorisant un débattement angulaire de la béquille (3) dans un plan sensiblement perpendiculaire à la rampe (13) et les moyens de rappel élastique comprennent un ressort de rappel (9).

6. Dispositif selon la revendication 5, dans lequel les moyens de fixation comprennent une chape (8) à laquelle la béquille (3) est reliée par l'axe d'articulation (5) et le ressort de rappel (9) s'étend entre la chape et une portion de la béquille opposée à la saillie latérale (4).

7. Dispositif selon la revendication 1, dans lequel la saillie latérale (4) et au moins un des logements (11, 12) sont agencés pour permettre un dégagement de la saillie latérale hors dudit logement lorsqu'est exercé sur la béquille un effort, supérieur à un seuil prédéterminé, pour déplacer la saillie latérale vers l'autre logement.

8. Appareil de traitement de feuilles, comportant deux éléments articulés l'un à l'autre, à savoir un châssis (1) et un capot (2) articulé au châssis entre une position basse de fermeture et une position haute d'ouverture, et au moins un dispositif conforme à l'une quelconque des revendications précédentes monté de telle manière que la saillie de l'extrémité libre (3.2) de la béquille (3) soit reçue dans les logements (11, 12) de la portion de châssis (10) lorsque le capot est dans les positions haute et basse.

9. Appareil selon la revendication 8, dans lequel la béquille (3) est solidaire du capot (2) et la portion de châssis (10) est solidaire du châssis (1), et la rampe (13) est agencée pour exercer un effort croissant sur la saillie latérale lorsque la saillie latérale est déplacée du logement supérieur (11) au logement inférieur (12).

10. Appareil selon la revendication 8, comprenant un seul dispositif décalé par rapport à un plan médian du capot (2) perpendiculaire à un axe d'articulation du capot au châssis.
